# FASCICULE DE BREVET EUROPEEN

(11) **EP 1 107 432 B1**
(45) Date de publication et mention de la délivrance du brevet: **13.12.2006**
(21) Numéro de dépôt: 00124786.5
(22) Date de dépôt: 14.11.2000
(51) Int. Cl.: H02K 5/24, H02K 5/22, B60H 1/00, F04D 29/66

(54) **Dispositif pour le support d'un moteur électrique, en particulier pour un équipement de véhicule automobile**
Einrichtung zum Halten eines Elektromotors, insbesondere für Kraftfahrzeugausstattung
Apparatus for supporting an electric motor, in particular for an automotive vehicle equipment

(30) Priorité: 30.11.1999 FR 9915087
(43) Date de publication de la demande: 13.06.2001
(73) Titulaire: VALEO SYSTEMES THERMIQUES, 78320 Le Mesnil Saint-Denis (FR)
(72) Inventeur: Terranova, Gilbert, 28000 Chartres (FR); Marroux, Olivier, 75016 Paris (FR); Boucheret, Bernard, 92230 Gennevilliers (FR); Fradin, Jacques, 72000 Le Mans (FR); Taillée, Gérard, 72230 Arnage (FR)

(56) Documents cités:
- EP-A- 0 848 476
- EP-A- 0 848 477
- EP-A- 0 871 278
- DE-A- 19 746 185
- DE-C- 19 752 672
- DE-U- 9 422 144
- FR-A- 2 737 060
- PATENT ABSTRACTS OF JAPAN vol. 017, no. 535 (E-1439), 27 septembre 1993 (1993-09-27) -& JP 05 146113 A (ASMO CO LTD), 11 juin 1993 (1993-06-11)

## Description

L'invention concerne un dispositif pour le support d'un moteur électrique, en particulier pour un équipement de véhicule automobile.

Une application préférentielle de l'invention concerne le support d'un moteur électrique entraînant une turbine et destiné à un appareil de chauffage et/ou climatisation de véhicule automobile.

On connaît déjà, en particulier d'après la publication FR 2 737 060, un dispositif de ce genre qui comprend un boîtier en matière plastique moulée ayant une paroi périphérique rattachée à une paroi de fond pour définir un logement de réception de l'enveloppe du moteur, et dans lequel la paroi périphérique comporte au moins une patte d'appui venue de moulage et formée en saillie vers l'intérieur du logement pour venir en appui contre l'enveloppe du moteur.

Dans ce dispositif connu, les pattes d'appui, qui peuvent être par exemple des pattes repliées en forme de L ou de U ou encore des méplats, sont réalisées dans la même matière plastique que le boîtier, c'est-à-dire une matière relativement rigide tel que du polypropylène.

De telles pattes d'appui contribuent au maintien de l'enveloppe du moteur à l'intérieur du boîtier. Cependant, comme ces pattes d'appui sont réalisées monobloc avec le boîtier et qu'elles viennent directement au contact de l'enveloppe du moteur, elles transmettent certaines vibrations, ce qui augmente le niveau sonore.

D'autre part, il a été constaté que, dans un dispositif connu du type précité, des vibrations pouvaient aussi être transmises entre l'enveloppe du moteur et d'autres parties du boîtier, en particulier la paroi de fond.

L'invention a notamment pour but de surmonter les inconvénients précités.

Elle vise en particulier à procurer un dispositif pour le support d'un moteur électrique qui permet de diminuer les vibrations et le niveau sonore.

En particulier, alors que dans la publication FR 2 737 060, les pattes d'appui n'amortissent que les basses fréquences (inférieures à 1000 Hz), l'un des buts de l'invention est aussi de diminuer les hautes fréquences.

L'invention propose à cet effet un dispositif de support du type défini en introduction, dans lequel chaque patte d'appui est munie au moins en partie d'un revêtement surmoulé en matériau absorbant, propre à constituer une interface entre la patte d'appui en matière plastique et l'enveloppe, ce qui permet d'assurer un découplage à basse fréquence par la patte d'appui et un découplage à haute fréquence par le revêtement surmoulé.

Ainsi, chaque patte d'appui est munie au moins en partie d'un revêtement surmoulé en matériau absorbant qui forme interface entre la patte d'appui et l'enveloppe du moteur.

Il en résulte que cette enveloppe n'est plus directement en contact avec la patte d'appui.

De ce fait, chaque patte d'appui amortit les vibrations de basse fréquence, tandis que le revêtement surmoulé amortit les hautes fréquences.

Il a été constaté qu'un tel revêtement surmoulé découple les hautes fréquences de manière significative à partir de 1000 hz.

Ainsi, grâce à la présence conjointe de la patte d'appui et du revêtement surmoulé, on obtient une diminution globale des vibrations et du niveau sonore, ce qui présente un intérêt tout particulier pour les équipements de véhicules automobiles.

Dans une forme de réalisation préférée de l'invention, chaque patte d'appui est une patte repliée qui présente une section transversale en forme de U ou de L.

Toutefois, il est possible d'envisager d'autres configurations et d'utiliser par exemple une ou plusieurs pattes d'appui réalisées chacune sous la forme d'un méplat.

Selon une autre caractéristique de l'invention, le revêtement surmoulé est présent sur deux faces opposées de chaque patte d'appui.

En effet, le fait de surmouler les deux faces de la patte d'appui permet de jouer sur le premier mode du support en ajustant l'épaisseur de la face qui n'est pas en contact avec l'enveloppe du moteur pour moduler la masse et régler ainsi le couplage masse-ressort.

Avantageusement, le revêtement surmoulé comprend alors deux parties appliquées respectivement sur les deux faces opposées de la patte d'appui et réunies entre elles par une bretelle de liaison au niveau d'une extrémité de la patte d'appui.

Ceci empêche l'arrachement du surmoulage lors de l'emmanchement du moteur dans le boîtier.

Dans l'invention, le revêtement surmoulé a de préférence une faible épaisseur, laquelle est comprise généralement entre 0,5 et 5 mm.

De façon avantageuse, le revêtement surmoulé a une épaisseur non constante et il comporte une surépaisseur de faible longueur, de préférence de section triangulaire, propre à assurer une ligne de contact le long de l'enveloppe du moteur. En effet plus la surface de contact avec le moteur est faible, meilleur est le découplage.

Dans une autre forme de réalisation, chaque patte d'appui comprend une structure sandwich avec une lame en S ou une lame double enfermant le surmoulage et une partie de la lame est propre à venir en appui contre l'enveloppe du moteur.

Cette partie de la lame comporte avantageusement une surépaisseur de faible longueur, de préférence de section triangulaire, propre à assurer une ligne de contact le long de l'enveloppe du moteur.

Selon une autre caractéristique avantageuse de l'invention, chaque patte d'appui comporte une base rattachée au boîtier par l'intermédiaire d'un pont surmoulé en matériau absorbant. Il en résulte que la base de la patte d'appui est découplée du boîtier, en particulier de la paroi de fond du boîtier, pour permettre une déformation sensiblement homogène de la patte d'appui sur toute sa longueur lorsque l'on positionne le moteur.

Avantageusement, ce pont surmoulé est formé conjointement avec le revêtement surmoulé, dans le même matériau absorbant.

Pour cela, le boîtier comprend avantageusement des canaux d'injection du matériau absorbant pour former le revêtement surmoulé autour de chaque patte d'appui.

De manière préférentielle, l'injection de ce matériau s'effectue à partir de la paroi de fond, en sorte que ce matériau s'écoule dans les canaux d'injection puis s'écoule de part et d'autre des pattes d'appui pour équilibrer les pressions.

Selon une autre caractéristique avantageuse, chaque patte d'appui est munie d'un moyen de centrage pour la maintenir en position lors de l'injection du matériau absorbant.

En effet, du fait que la base de chaque patte d'appui n'est pas reliée directement au boîtier, la patte d'appui est fragilisées et peut avoir tendance à se déplacer lors de l'injection.

Il est avantageux également que le boîtier comprenne des nervures de renforcement à proximité des canaux d'injection, pour renforcer le boîtier.

Selon une autre caractéristique de l'invention, le boîtier comporte un passage pour un connecteur électrique relié au moteur, et il est prévu un joint surmoulé en matériau absorbant à l'interface dudit passage et dudit connecteur électrique. Ceci permet de découpler le connecteur du boîtier et ainsi d'amortir les vibrations et d'assurer l'étanchéité.

Selon encore une autre caractéristique de l'invention, la paroi de fond du boîtier comporte une ouverture pour le passage d'une pige d'appui de montage, et il est prévu un cordon annulaire surmoulé en matériau absorbant placé autour de cette ouverture et interposé entre la paroi de fond et l'enveloppe du moteur. Cette pige sert de pige de contre-réaction venant en butée en bout de l'arbre du moteur lors du montage d'un accessoire, en particulier d'une turbine, sur cet arbre.

Le boîtier du dispositif de l'invention est avantageusement formé à partir d'une matière thermoplastique, en particulier du polypropylène.

Quant au matériau absorbant, il s'agit avantageusement d'un élastomère ayant une dureté comprise entre 20 et 90 Shore.

Dans la description qui suit, faite seulement à titre d'exemple, on se réfère aux dessins annexés, sur lesquels :
- la figure 1 est une demi-vue en coupe axiale d'un dispositif de support d'un moteur électrique selon une première forme de réalisation de l'invention ;
- la figure 2a est une vue partielle en coupe selon la ligne II-II de la figure 1 ;
- les figures 2b, 2c et 2d sont des vues en coupe analogues à la figure 2a pour d'autres variantes de réalisation ;
- la figure 3 est une vue partielle en coupe selon la ligne III-III de la figure 1 ;
- la figure 4 est une demi-vue en coupe analogue à la figure 1 dans une autre forme de réalisation de l'invention ;
- la figure 5a est une vue partielle en coupe selon la ligne V-V de la figure 4 ;
- la figure 5b est une vue en coupe analogue à la figure 5a pour une variante de réalisation ;
- la figure 6 est une vue partielle en coupe du dispositif de l'invention au niveau d'un connecteur électrique ;
- la figure 7 est une vue partielle en coupe de la paroi de fond du boîtier dans une forme de réalisation ;
- la figure 8 est une vue analogue à la figure 7 dans une autre forme de réalisation ;
- la figure 9 est une vue partielle en coupe selon la ligne IX-IX de la figure 2c ;
- la figure 10 est une vue partielle en coupe selon la ligne X-X de la figure 2d ; et
- les figures 11a et 11b sont des vues partielles en coupe de l'extrémité d'une patte d'appui dans deux variantes de réalisation.

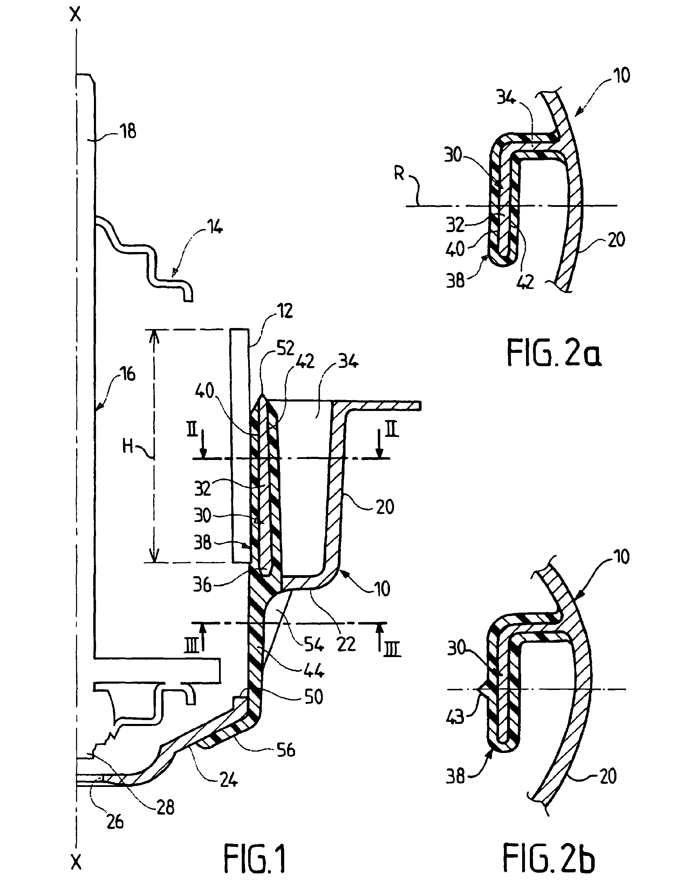

Le dispositif des figures 1, 2a et 3 comprend un boîtier 10 obtenu par moulage d'une matière plastique, par exemple en polypropylène. Ce boîtier est conformé pour délimiter un logement ouvert propre à recevoir l'enveloppe 12 d'un moteur électrique 14. Ce moteur comprend un arbre 16 pouvant être entraîné en rotation autour d'un axe X-X et possédant une extrémité libre 18 sur laquelle peut être calée une pièce (non représentée) à entraîner en rotation. Dans une application préférentielle de l'invention, l'extrémité 18 de l'arbre reçoit une turbine pour constituer un ensemble moteur-turbine, encore appelé "moto-ventilateur". Un tel ensemble trouve une application dans les installations de chauffage et/ou climatisation pour véhicules automobiles.

Le boîtier 10 comprend une paroi périphérique 20 rattachée par une paroi intermédiaire 22 formant épaulement à une paroi de fond 24, laquelle est munie d'une ouverture 26 en regard de l'autre extrémité 28 de l'arbre 16. Cette ouverture 26 peut être obturée, par exemple, par un bouchon (non représenté).

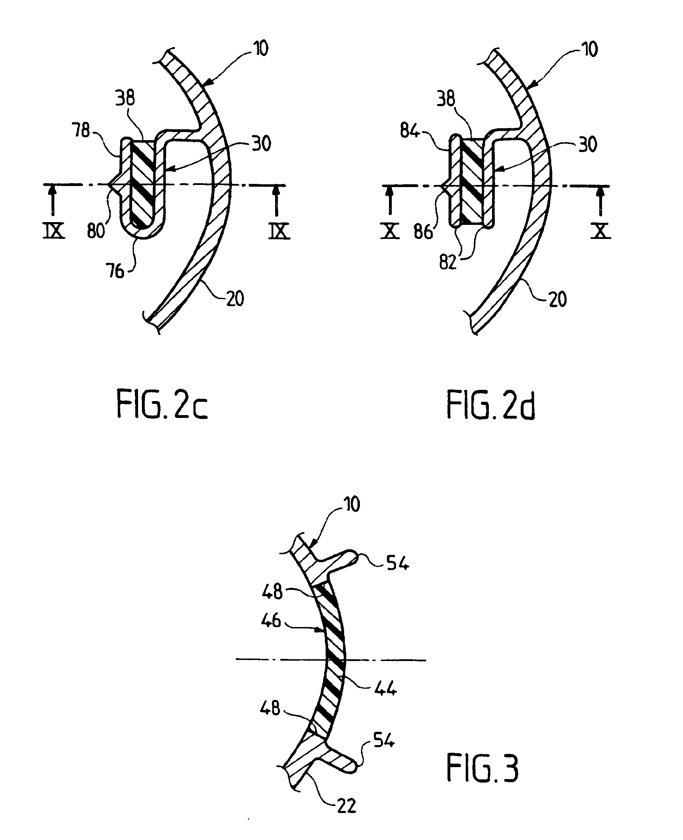

Le boîtier 10 comporte des pattes d'appui 30 (figures 1 et 2), encore appelées "lamelles", venues de moulage avec lui et formées en saillie vers l'intérieur du logement pour venir en appui contre l'enveloppe 12 du moteur. Ces pattes d'appui s'étendent parallèlement entre elles et à l'axe X-X.

Dans une forme de réalisation préférentielle, ces pattes d'appui sont au nombre de quatre et décalées deux à deux d'un angle de 90° par rapport à l'axe X-X. Dans une autre forme de réalisation (non représentée), ces pattes d'appui sont au nombre de trois et décalées deux à deux d'un angle de 120°.

Chacune des pattes 30 comprend une âme 32 qui s'étend parallèlement à l'axe X-X et sur une hauteur H (figure 1) dans la direction axiale. L'âme s'étend perpendiculairement à une ligne radiale R (figure 2a) passant par l'axe X-X. L'âme 32 se raccorde à la paroi périphérique 20 par une partie coudée 34 qui s'étend sensiblement sur la hauteur H et qui se raccorde également à la paroi intermédiaire 22 (figure 1). Ainsi chacune des pattes d'appui possède une section transversale sensiblement en forme de L ou de U.

L'âme 32 comporte une base 36 qui est libre et qui ne se rattache pas directement au boîtier de manière à réaliser un découplage entre la patte d'appui et le boîtier.

Chacune des pattes d'appui 30 est munie, au moins en partie, d'un revêtement surmoulé 38 (figures 1 et 2a) qui vient recouvrir deux faces opposées 40 et 42 de la patte d'appui, la face 40 étant celle tournée vers l'enveloppe du moteur et la face 42 étant celle tournée du côté de la paroi périphérique 20.

Le revêtement surmoulé est formé d'un matériau absorbant, en particulier d'un élastomère ayant une dureté comprise entre 20 et 90 Shore. Ce revêtement est appliqué avec une faible épaisseur généralement comprise entre 0,5 et 5 mm, et typiquement de l'ordre de 2 mm. Ainsi, chacune des pattes d'appui 30 ne vient pas directement au contact avec l'enveloppe 12 puisque ce revêtement 38 forme une interface, comme on peut le voir notamment sur la figure 1.

Ainsi, la face 40 de la patte d'appui, contre laquelle l'enveloppe 12 du moteur vient en appui, est munie d'un revêtement surmoulé formant interface. Ce surmoulage découple les hautes fréquences de manière significative à partir de 1000 Hz. On réalise ainsi un découplage à basse fréquence par la patte d'appui proprement dite et un découplage à haute fréquence par le revêtement surmoulé, ce qui permet de diminuer les vibrations transmises au boîtier par le moteur et par conséquent le niveau sonore.

Dans la forme de réalisation de la figure 2a, le revêtement surmoulé 38 présente une face destinée à venir en contact avec l'enveloppe du moteur.

Par contre, dans la variante de réalisation de la figure 2b, le revêtement surmoulé 38 a une épaisseur non constante et il comporte une surépaisseur 43 de faible longueur, de préférence de section triangulaire, propre à assurer une ligne de contact le long de l'enveloppe du moteur. En effet, plus la surface de contact avec l'enveloppe est faible, meilleur est le découplage.

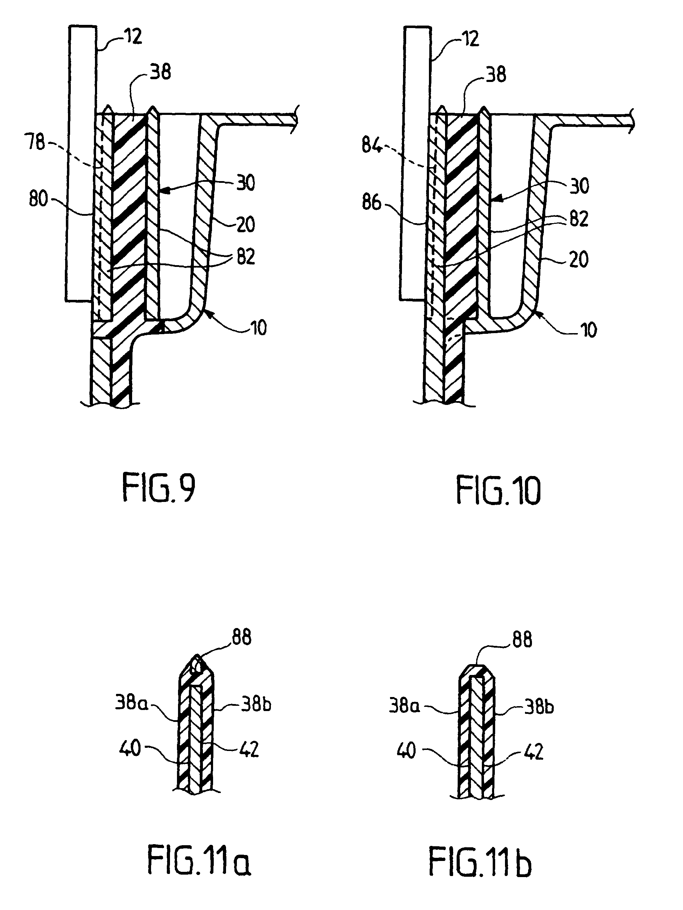

Dans les variantes de réalisation des figures 2c et 2d, qui seront décrites plus loin en référence aux figures 9 et 10, on trouve aussi une surépaisseur analogue.

Comme on peut le voir sur les figures 1 et 3, ce revêtement surmoulé se prolonge, à partir de la base 36 de la patte d'appui, pour former un pont de matière 44 qui s'étend jusqu'à la paroi de fond. Ce pont de matière 44 s'étend en arc de cercle (figure 3) et vient combler un canal d'injection 46 délimité par deux lèvres espacées 48 formées dans la paroi intermédiaire 22. Ce canal est délimité également, dans la direction axiale, d'une part par la base 36 et d'autre part par une lèvre 50 de la paroi de fond 24.

Ce canal d'injection est également délimité radialement, vers l'intérieur et vers l'extérieur par des parties du moule (non représenté) qui sert à la réalisation du boîtier.

Dans l'exemple représenté, le boîtier définit quatre canaux d'injection pour permettre de réaliser les revêtements surmoulés 38 appliqués respectivement autour des quatre pattes d'appui, ainsi que les ponts de matière correspondants.

Le matériau absorbant est injecté dans le sens du fond du boîtier vers l'extrémité ouverte du boîtier et il s'écoule dans les canaux 46 puis de part et d'autre des pattes d'appui pour équilibrer les pressions. Etant donné que ces pattes d'appui sont relativement élastiques, il est avantageux qu'elles comportent des moyens de centrage 52 (figure 1) qui permettent de les maintenir en position pendant l'opération d'injection.

Il est avantageux aussi de prévoir de place en place des nervures de renforcement 54 de part et d'autre de chacun des canaux d'injection (figures 1 et 3).

Le pont de matière 44 comporte ici une partie d'extrémité 56 qui vient recouvrir en partie la paroi de fond 24 (figure 1).

Le matériau absorbant est avantageusement une matière de type EPDM ou tout autre compound polypropylène/élastomère.

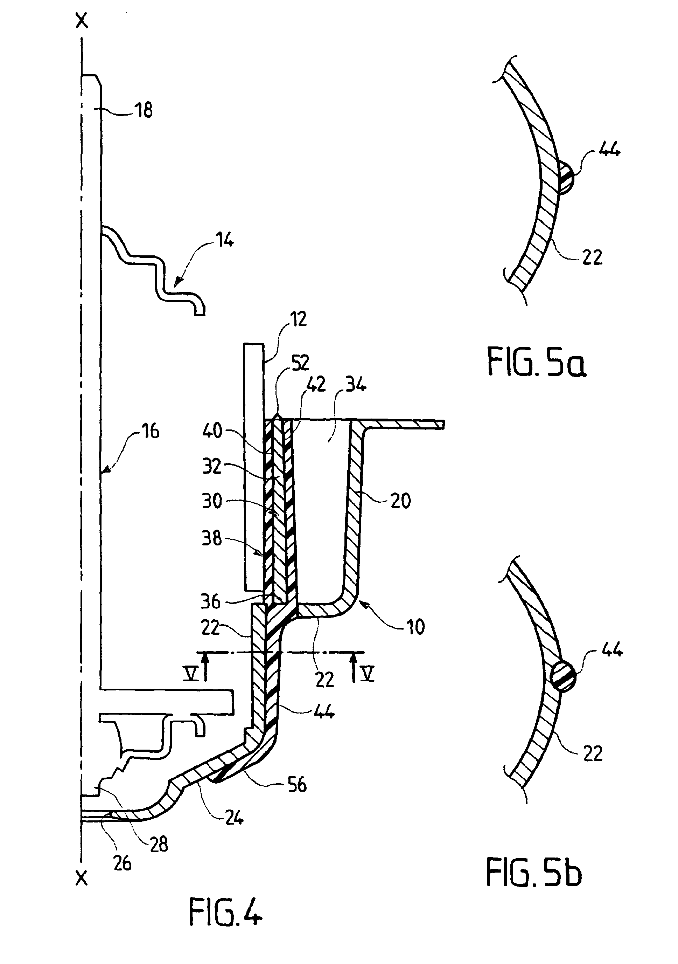

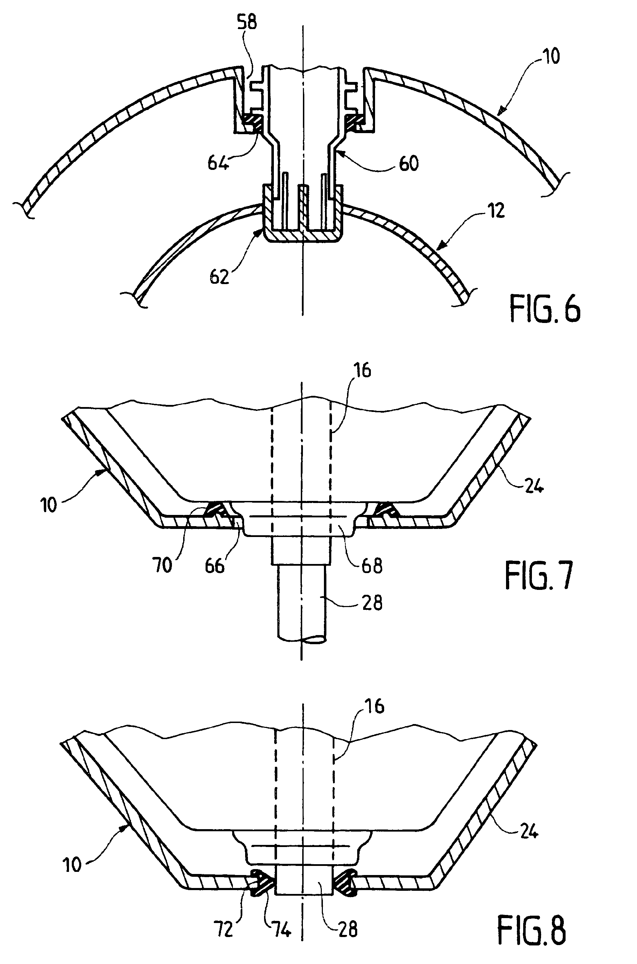

On se réfère maintenant aux figures 4 et 5a qui montrent une autre variante de réalisation de l'invention qui s'apparente à celle des figures 1, 2a et 3, sauf qu'ici le pont de matière 44 est formé à l'extérieur de la paroi intermédiaire 22, si bien que cette paroi est moins fragilisée que dans la forme de réalisation précédente.

Dans la variante de la figure 5b, le pont de matière 44 est formé par un canal creusé en partie dans la paroi intermédiaire 22 du boîtier, du côté extérieur. Dans une autre variante (non représentée), le pont de matière peut être formé par un canal creusé en partie dans la paroi 22, du côté intérieur.

On se réfère maintenant à la figure 6 qui montre que le boîtier 10 comporte un passage 58 s'étendant radialement pour permettre l'enfichage d'un connecteur électrique 60 susceptible d'être relié électriquement à une fiche de connexion 62 que porte l'enveloppe 12 du moteur.

Il est prévu un joint surmoulé 64 en matériau absorbant à l'interface du passage 58 et du connecteur électrique 60. Le joint 64 est avantageusement formé dans le même matériau que décrit précédemment. Il permet d'amortir les vibrations et d'assurer l'étanchéité. Il en résulte que le connecteur est découplé du boîtier, contrairement à ce qui était prévu dans la technique antérieure où le connecteur et le boîtier étaient réalisés de la même matière sans propriétés anti-vibratoires.

On se réfère maintenant à la figure 7 qui montre une autre forme de réalisation de la paroi de fond 24 du boîtier. Dans cette forme de réalisation, la paroi de fond comporte une ouverture 66 pour le passage d'une pige de montage ou de contre-réaction (non représentée) venant en butée en bout de l'arbre du moteur lors du montage d'un accessoire, par exemple d'une turbine, sur cet arbre. Cette ouverture est ici suffisamment large pour laisser passage à une bague 68 qui est rattachée à l'enveloppe du moteur et qui livre passage à l'arbre. Pour assurer l'étanchéité entre le boîtier et l'enveloppe, on prévoit un cordon annulaire surmoulé 70 en matériau absorbant. Ici, ce cordon 70 est interposé entre la paroi de fond et l'enveloppe 12 du moteur, en entourant la bague 68.

Dans la forme de réalisation de la figure 8, la paroi de fond comporte une ouverture 72 plus étroite que dans la forme de réalisation précédente, étant donné que la bague 68 se trouve ici contenue dans le boîtier. Cette ouverture 72 entoure directement l'extrémité 28 de l'arbre et il est prévu un cordon annulaire surmoulé 74 interposé entre la paroi de fond et l'arbre du moteur. Dans ce cas, le cordon surmoulé sert de joint d'étanchéité autour de l'extrémité 28 de l'arbre du moteur.

On se réfère maintenant à la forme de réalisation des figures 2c et 9, dans lesquelles chaque patte d'appui 30 comprend une structure sandwich avec une lame 76 en forme de S qui enferme le surmoulage 38 et qui présente une partie interne 78 propre à venir en appui contre l'enveloppe du moteur. Cette partie 78 de la lame comporte une surépaisseur 80 de faible longueur, de préférence de section triangulaire, propre à assurer une ligne de contact le long de l'enveloppe du moteur. Cette surépaisseur 80 s'apparente ainsi à la surépaisseur 43 de la figure 2b.

Dans la forme de réalisation des figures 2d et 10, chaque patte d'appui 30 comprend une structure sandwich avec une lame double 82 enfermant le surmoulage 38 qui présente une partie interne 84 propre à venir en appui contre l'enveloppe 12 du moteur. Cette partie 84 de la lame comporte une surépaisseur 86 analogue à la surépaisseur 80 de la figure 2c.

Dans les deux cas, la surépaisseur 80 ou 86 diminue la surface de contact avec l'enveloppe 12 du moteur, en procurant un meilleur découplage.

Dans les formes de réalisation des figures 11a et 11b, qui s'apparentent à celle de la figure 2a, le revêtement surmoulé 38 comprend deux parties 38a et 38b appliquées respectivement sur les deux faces opposées 40 et 42 de la patte d'appui. Les deux parties 38a et 38b sont réunies entre elles par une bretelle de liaison 88 située au niveau d'une extrémité de la patte d'appui. En l'occurrence il s'agit de l'extrémité de la patte d'appui qui est à l'opposé du fond du boîtier. Ceci permet d'éviter l'arrachement du surmoulage lors de l'emmanchement du moteur dans le boîtier.

L'invention n'est pas limitée aux formes de réalisation décrites précédemment à titre d'exemple et s'étend à d'autres variantes que l'homme du métier pourra envisager dans le cadre des revendications ci-après.

En particulier, on comprendra que la structure des pattes d'appui est susceptible de nombreuses variantes. Il ne s'agit pas obligatoirement de pattes repliées en forme de U ou de L. Il est possible, par exemple, de réaliser ces pattes d'appui sous la forme de méplats conformés directement dans la paroi périphérique.

Dans tous les cas, le revêtement surmoulé formant interface entre les pattes d'appui et l'enveloppe du moteur permet de diminuer sensiblement les vibrations et par conséquent le niveau sonore.

L'invention trouve une application particulière aux équipements pour véhicules automobiles.

## Revendications

1. Dispositif pour le support d'un moteur électrique, en particulier pour un équipement de véhicule automobile, comprenant un boîtier (10) en matière plastique moulée ayant une paroi périphérique (20) rattachée à une paroi de fond (24) pour définir un logement de réception de l'enveloppe (12) du moteur, et dans lequel la paroi périphérique comporte au moins une patte d'appui (30) venue de moulage et formée en saillie vers l'intérieur du logement pour venir en appui contre l'enveloppe du moteur,
**caractérisé en ce que** chaque patte d'appui (30) est munie au moins en partie d'un revêtement surmoulé (38) en matériau absorbant les vibrations propre à constituer une interface entre la patte d'appui en matière plastique et l'enveloppe (12), ce qui permet d'assurer un découplage à basse fréquence par la patte d'appui et un découplage à haute fréquence par le revêtement surmoulé.

2. Dispositif selon la revendication 1, **caractérisé en ce que** chaque patte d'appui (30) est une patte repliée qui présente une section transversale en forme de U ou de L.

3. Dispositif selon l'une des revendications 1 et 2, **caractérisé en ce que** chaque patte d'appui (30) est munie du revêtement surmoulé (38) sur deux faces opposées (40, 42).

4. Dispositif selon la revendication 3, **caractérisé en ce que** le revêtement surmoulé (38) comprend deux parties (38a, 38b) appliquées respectivement sur les deux faces opposées (40, 42) de la patte d'appui et réunies entre elles par une bretelle de liaison (88) au niveau d'une extrémité de la patte d'appui.

5. Dispositif selon l'une des revendications 1 à 4,
**caractérisé en ce que** le revêtement surmoulé (38) a une épaisseur comprise entre 0,5 et 5 mm.

6. Dispositif selon l'une des revendications 1 à 5, **caractérisé en ce que** le revêtement surmoulé (38) a une épaisseur non constante et comporte une surépaisseur (43) de faible longueur, de préférence de section triangulaire, propre à assurer une ligne de contact le long de l'enveloppe du moteur.

7. Dispositif selon la revendication 1, **caractérisé en ce que** chaque patte d'appui (30) comprend une structure sandwich avec une lame en forme de S (76) ou une lame double (82) enfermant le surmoulage (38) et **en ce qu'**une partie (78 ; 84) de la lame est propre à venir en appui contre l'enveloppe du moteur.

8. Dispositif selon la revendication 7, **caractérisé en ce que** ladite partie (78 ; 84) de la lame comporte une surépaisseur (80 ; 86) de faible longueur, de préférence de section triangulaire, propre à assurer une ligne de contact le long de l'enveloppe du moteur.

9. Dispositif selon l'une des revendications 1 à 8, **caractérisé en ce que** chaque patte d'appui (30) comporte une base (36) rattachée au boîtier (10) par l'intermédiaire d'un pont surmoulé (44) en matériau absorbant.

10. Dispositif selon la revendication 9, **caractérisé en ce que** le pont surmoulé (44) est formé conjointement avec le revêtement surmoulé (38).

11. Dispositif selon l'une des revendications 1 à 10, **caractérisé en ce que** le boîtier (10) comprend des canaux d'injection (46) du matériau absorbant pour former les revêtements surmoulés (38) autour de chaque patte d'appui (30).

12. Dispositif selon la revendication 11, **caractérisé en ce que** le boîtier (10) comprend des nervures de renforcement (54) à proximité desdits canaux d'injection (46).

13. Dispositif selon l'une des revendications 1 à 12, **caractérisé en ce que** chaque patte d'appui (30) comprend des moyens de centrage (52) pour la maintenir en position pendant l'injection du matériau absorbant.

14. Dispositif selon l'une des revendications 1 à 13, **caractérisé en ce que** le boîtier comporte un passage (58) pour un connecteur électrique (60) relié au moteur, et **en ce qu'**il est prévu un joint surmoulé (64) en matériau absorbant à l'interface du passage et du connecteur électrique.

15. Dispositif selon l'une des revendications 1 à 14, **caractérisé en ce que** la paroi de fond (24) du boîtier comporte une ouverture (66 ; 72) pour le passage d'une pige d'appui de montage, et **en ce qu'**il est prévu un cordon annulaire surmoulé (70 ; 74) en matériau absorbant placé autour de cette ouverture et interposé entre la paroi de fond (24) et l'enveloppe (12) du moteur.

16. Dispositif selon l'une des revendications 1 à 15, **caractérisé en ce que** le boîtier (10) est formé à partir d'une matière thermoplastique, en particulier du polypropylène.

17. Dispositif selon l'une des revendications 1 à 16, **caractérisé en ce que** le matériau absorbant est un élastomère ayant une dureté comprise entre 20 et 90 Shore.

## Claims

1. Device for the support of an electric motor, particularly for equipment in a motor vehicle, comprising a moulded plastic box (10) with a peripheral wall (20) attached to a back wall (24) to define a reception housing for the casing (12) of the motor, and in which the peripheral wall comprises at least one moulded bearing tab (30) projecting inwards into the housing to come into contact against the motor casing,
**characterised in that** each bearing tab (30) is at least partly provided with an insert moulded coating (38) made of a material capable of absorbing vibrations and capable of forming an interface between the plastic bearing tab and the casing (12), that gives low frequency decoupling through the bearing tab and high frequency decoupling through the insert moulded coating.

2. Device according to claim 1, **characterised in that** each bearing tab (30) is a folded tab with a U or L shaped cross section.

3. Device according to claims 1 and 2, **characterised in that** each bearing tab (30) is provided with an insert moulded coating (38) on two opposite faces (40, 42).

4. Device according to claim 3, **characterised in that** the insert moulded coating (38) comprises two parts (38a, 38b) applied on the two opposite faces (40, 42) of the bearing tab and connected to each other through a connecting strap (88) at one end of the bearing tab.

5. Device according to any of claims 1 to 4, **characterised in that** the insert moulding coating (38) is between 0.5 and 5 mm thick.

6. Device according to any of claims 1 to 5, **characterised in that** the insert moulded coating (38) has a variable thickness and comprises a very short overthickness (43), preferably with a triangular section, capable of providing a contact line along the motor casing.

7. Device according to claim 1, **characterised in that** each bearing tab (30) comprises a sandwich structure with an S-shaped blade (76) or a double blade (82) enclosing the insert moulding (38), and **in that** part (78; 84) of the blade can come into contact against the motor casing.

8. Device according to claim 7, **characterised in that** the said part (78; 84) of the blade comprises a short overthickness (80; 86), preferably triangular in section, capable of providing a contact line along the motor casing.

9. Device according to any of claims 1 to 8, **characterised in that** each bearing tab (30) comprises a base (36) attached to the box (10) through an insert moulded bridge (44) made of an absorbent material.

10. Device according to claim 9, **characterised in that** the insert moulded bridge (44) is formed jointly with the insert moulded coating (38).

11. Device according to any of claims 1 to 10, **characterised in that** the box (10) comprises injection channels (46) for injecting the absorbent material to form insert moulded coatings (38) around each bearing tab (30).

12. Device according to claim 11, **characterised in that** the box (10) comprises reinforcing ribs (54) close to said injection channels (46).

13. Device according to one of claims 1 to 12, **characterised in that** each bearing tab (30) comprises centring means (52) to hold it in position during the injection of the absorbent material.

14. Device according to any of claims 1 to 13, **characterised in that** the box comprises a passage (58) for an electrical connector (60) connected to the motor, and **in that** an overmoulded seal (64) made of an absorbent material is provided at the interface between the passage and the electrical connector.

15. Device according to any of claims 1 to 14, **characterised in that** the bottom wall (24) of the box comprises an opening (66; 72) for the passage of an assembly bearing rod, and **in that** an annular overmoulded strip (70; 74) made of an absorbent material is provided around this opening and inserted between the back wall (24) and the motor casing (12).

16. Device according to any of claims 1 to 15, **characterised in that** the box (10) is formed from a thermoplastic material, particularly polypropylene.

17. Device according to any of claims 1 to 16, **characterised in that** the absorbent material is an elastomer with a hardness of between 20 and 90 Shore.

## Patentansprüche

1. Vorrichtung für den Halt eines Elektromotors, insbesondere für eine Kraftfahrzeugausrüstung, die ein Gehäuse (10) aus Formkunststoff umfasst, das eine Umfangswand (20) hat, die an einer Bodenwand (24) befestigt ist, um eine Ablage zur Aufnahme der Hülle (12) des Motors zu definieren und in der die Umfangswand mindestens eine Stützklaue (30) umfasst, die durch Formen gewonnen wird und überstehend geformt ist, in Richtung des Innenraumes der Aufnahme, um sich gegen die Hülle des Motors zu stützen,
**dadurch gekennzeichnet, dass** jede Stützklaue (30) zumindest teilweise mit einem ausgegossenen Überzug (38) aus einem Material versehen ist, welches die Vibrationen absorbiert, der eine Schnittstelle zwischen der Stützklaue aus Kunststoff und der Hülle (12) bilden kann, was die Gewährleistung einer Entkopplung bei Niederfrequenz durch die Stützklaue ermöglicht und eine Entkopplung bei Hochfrequenz durch den ausgegossenen Überzug.

2. Vorrichtung gemäß Anspruch 1, **dadurch gekennzeichnet, dass** jede Stützklaue (30) eine umgeschlagene Klaue ist die einen Querschnitt in u- oder L-Form aufweist.

3. Vorrichtung gemäß einem der Ansprüche 1 und 2, **dadurch gekennzeichnet, dass** jede Stützklaue (30) auf zwei gegenüberliegenden Seiten (40, 42) mit dem ausgegossenen Überzug (38) versehen ist.

4. Vorrichtung gemäß Anspruch 3, **dadurch gekennzeichnet, dass** der ausgegossene Überzug (38) zwei Teile (38a, 38b) umfasst, die jeweils auf den beiden gegenüberliegenden Seiten (40, 42) der Stützklaue aufgetragen sind und die untereinander durch einen Verbindungsriemen (88) im Bereich eines Endes der Stützklaue verbunden sind.

5. Vorrichtung gemäß einem der Ansprüche 1 bis 4, **dadurch gekennzeichnet, dass** der ausgegossene Überzug (38) eine Dicke zwischen 0,5 und 5 mm hat.

6. Vorrichtung gemäß einem der Ansprüche 1 bis 5, **dadurch gekennzeichnet, dass** der ausgegossene Überzug (38) eine nicht konstante Dicke hat und eine Überdicke (43) mit geringer Länge umfasst, vorzugsweise mit dreieckigem Querschnitt, um imstande zu sein, eine Kontaktlinie entlang der Hülle des Motors zu gewährleisten.

7. Vorrichtung gemäß Anspruch 1, **dadurch gekennzeichnet, dass** jede Stützklaue (30) eine Sandwich-Struktur mit einer Klinge in S-Form (76) oder einer doppelten Klinge (82) umfasst, welche den Überzug (38) umschließt und **dadurch**, dass ein Teil (78; 84) der Klinge gegen die Hülle des Motors abgestützt werden kann.

8. Vorrichtung gemäß Anspruch 7, **dadurch gekennzeichnet, dass** der besagte Teil (78; 84) der Klinge eine Überdicke (80; 86) mit geringer Länge umfasst, vorzugsweise mit dreieckigem Querschnitt, um imstande zu sein, eine Kontaktlinie entlang der Hülle des Motors zu gewährleisten.

9. Vorrichtung gemäß einem der Ansprüche 1 bis 8, **dadurch gekennzeichnet, dass** jede Stützklaue (30) eine Basis (36) umfasst, die durch einen ausgegossenen Haltebügel (44) aus absorbierendem Material an dem Gehäuse (10) befestigt ist.

10. Vorrichtung gemäß Anspruch 9, **dadurch gekennzeichnet, dass** der ausgegossene Haltebügel (44) gemeinsam mit dem ausgegossenen Überzug (38) geformt ist.

11. Vorrichtung gemäß einem der Ansprüche 1 bis 10, **dadurch gekennzeichnet, dass** das Gehäuse (10) Einspritzkanäle (46) des absorbierenden Materials umfasst, um die ausgegossenen Überzüge (38) rund um jede Stützklaue (30) zu bilden.

12. Vorrichtung gemäß Anspruch 11, **dadurch gekennzeichnet, dass** das Gehäuse (10) verstärkungsrippen (54) in der Nähe der besagten Einspritzkanäle (46) umfasst.

13. Vorrichtung gemäß einem der Ansprüche 1 bis 12, **dadurch gekennzeichnet, dass** jede Stützklaue (30) Zentriermittel (52) umfasst, um sie während des Einspritzens des absorbierenden Materials in Position zu halten.

14. Vorrichtung gemäß einem der Ansprüche 1 bis 13, **dadurch gekennzeichnet, dass** das Gehäuse einen Durchgang (58) umfasst für einen elektrischen Steckverbinder (60), der mit dem Motor verbunden ist und **dadurch**, dass eine ausgegossene Dichtung (64) aus absorbierendem Material an der Schnittstelle des Durchgangs und des elektrischen Steckverbinders vorgesehen ist.

15. Vorrichtung gemäß einem der Ansprüche 1 bis 14, **dadurch gekennzeichnet, dass** die Bodenwand (24) des Gehäuses eine Öffnung (66; 72) umfasst, für den Durchgang einer Stützwandmesslehre zur Montage und **dadurch**, dass eine ausgegossene Ringschnur (70; 74) aus absorbierendem Material vorgesehen ist, die um diese Öffnung herum platziert ist und zwischen der Bodenwand (24) und der Hülle (12) des Motors eingesetzt ist.

16. Vorrichtung gemäß einem der Ansprüche 1 bis 15, **dadurch gekennzeichnet, dass** das Gehäuse (10) aus einem thermoplastischen Material geformt ist, insbesondere aus Polypropylen.

17. Vorrichtung gemäß einem der Ansprüche 1 bis 16, **dadurch gekennzeichnet, dass** das absorbierende Material ein Elastomer ist, mit einer Shore-Härte zwischen 20 und 90.
